# EUROPÄISCHE PATENTSCHRIFT

(11) **EP 2 736 775 B1**
(45) Veröffentlichungstag und Bekanntmachung des Hinweises auf die Patenterteilung: **14.10.2015**
(21) Anmeldenummer: 12731497.9
(22) Anmeldetag: 06.07.2012
(51) Int. Cl.: B60S 1/38, B60S 1/40

(54) **ANSCHLUSSVORRICHTUNG ZUM GELENKIGEN VERBINDEN EINES WISCHBLATTS MIT EINEM WISCHARM UND EIN ADAPTER**
CONNECTING DEVICE FOR THE ARTICULATED CONNECTION OF A WIPER BLADE TO A WIPER ARM, AND AN ADAPTOR
DISPOSITIF DE RACCORDEMENT POUR LA LIAISON ARTICULÉE D'UNE RACLETTE À UN PORTE-BALAIS ET UN ADAPTATEUR

(30) Priorität: 26.07.2011 DE 102011079783
(43) Veröffentlichungstag der Anmeldung: 04.06.2014
(73) Patentinhaber: Robert Bosch GmbH, 70442 Stuttgart (DE)
(72) Erfinder: DEPONDT, Helmut, B-3010 Kessel-Lo (BE)
(86) Internationale Anmeldenummer: PCT/EP2012/063261
(87) Internationale Veröffentlichungsnummer: WO 2013/013958

(56) Entgegenhaltungen:
- WO-A1-2004/069618
- DE-A1-102009 000 483
- DE-A1-102010 041 152
- DE-U1-202005 021 307

## Beschreibung

### Stand der Technik

Die Erfindung geht von einer Anschlussvorrichtung zum gelenkigen Verbinden eines Wischblatts mit einem Wischarm und einem Adapter nach dem Oberbegriff des Anspruchs 1 und 12 aus.

Scheibenwischer für Kraftfahrzeuge haben neben einem Wischarm, der von einem Antrieb angetrieben wird, ein Wischblatt, das über eine Anschlussvorrichtung gelenkig mit dem Wischarm verbunden ist. Während der Antrieb und der Wischarm keine eigentlichen Verschleißteile sind und die Lebensdauer eines Kraftfahrzeugs erreichen, muss das Wischblatt häufiger erneuert werden. Hierfür ist es wünschenswert, dass das Wischblatt einfach vom Wischarm gelöst werden kann und zu mehreren Wischarmentypen passt, sodass die Teilevielfalt klein gehalten werden kann. Da der Wischarm zur Erstausrüstung des Kraftfahrzeugs gehört, wird er in seiner Form und Gestaltung stark vom Kraftfahrzeughersteller beeinflusst, während das Wischblatt als Verschleißteil in der Regel zum Einflussbereich des Zulieferunternehmens zu rechnen ist.

Um den oben genannten Forderungen nachzukommen, wurden Konzepte entwickelt, bei denen ein Anschlusselement drehfest mit dem Wischblatt, vorzugsweise seinem Tragelement verbunden ist, und ein Teil eines Gelenks umfasst. Das Anschlusselement kann einstückig am Tragelement angeformt oder als separates Bauteil an diesem befestigt sein. Dabei kann es einteilig oder mehrteilig ausgeführt sein. Mit dem Gelenkteil des Anschlusselements, z.B. einer Nabe oder einem Gelenkbolzen, ist ein Adapter mit einem entsprechenden Gelenkteil gelenkig verbunden. Der Adapter besitzt Form- und Funktionsmittel, durch die er häufig zu mehreren Typen von Wischarmen bzw. Verbindungselementen passt, die mit dem jeweiligen Wischarm drehfest aber lösbar verbunden werden können.

Aus der WO 2004 0696 18 A1 ist ein Wischblatt mit einem Tragbügelsystem bekannt, bei dem ein Adapter sowohl zum gelenkigen Verbinden einer Wischstange mit einem hakenförmigen Ende als auch zu einem Wischarm mit einer geraden Wischstange und einem Wischarm geeignet ist, der nach dem Sidelockprinzip mit dem Wischblatt verbunden wird.

Ferner ist aus der DE 202005021307 U1 eine Anschlussvorrichtung zum gelenkigen Verbinden eines Wischblatts in Flachbalkenbauweise bekannt, die für verschiedene Wischarme geeignet ist. Die Anschlussvorrichtung umfasst mindestens ein einteiliges oder mehrteiliges Anschlusselement, das fest, aber lösbar mit einem Tragelement in Form von Federschienen befestigt ist und ein Lagerelement aufweist, auf dem oder in dem ein mit dem Wischarm fest verbundenes Lagerelement schwenkbar gelagert ist und gegebenenfalls ein oder mehrere Zwischenstücke besitzt, durch die die Anschlussmöglichkeiten des Anschlusselements auf die Aufnahmeeinrichtungen des Verbindungselements des Wischarms abgestimmt werden können. Diese Verbindungsstücke sind für alle Anwendungsmöglichkeiten der Anschlussvorrichtung unterschiedlich. Die Anschlussvorrichtung eignet sich für einen Wischarm mit einem hakenförmigen Ende bzw. Verbindungselement oder einem Ende bzw. Verbindungselement mit einem seitlichen Lagerstift und einer Brücke entsprechend einem bekannten Sidelock-Prinzip oder einem Wischarm mit einem Ende bzw. Verbindungselement, bei dem der Wischarm im Wesentlichen gradlinig oberhalb des Wischblatts verläuft und nach dem Toplock-Prinzip mit dem Anschlusselement verbunden ist.

Aus der DE 10 2009 000483 A1 ist eine Anschlussvorrichtung für ein Wischblatt in Flachbalkenbauweise bekannt, das durch einen Adapter mit einer Abdeckkappe mit vier unterschiedlichen Wischarmen bzw. Verbindungselemente der Wischarme gelenkig verbunden werden kann. Der Adapter besitzt an seinem zum Antrieb weisenden Ende einen Federbügel, der in Längsrichtung verläuft und an seinen nach außen weisenden Seitenflächen vorspringende Rastnocken aufweist, die zum abtriebsseitigen Ende zwei Anschlagsflächen besitzen. Die erste Anschlagfläche schließt mit dem Tragelement einen spitzen Winkel ein, während die zweite Anschlagfläche etwa senkrecht zum Tragelement verläuft. Oberhalb des Federbügels besitzt der Adapter eine Taste, die über eine Federzunge mit dem Adapter verbunden ist und über die oberen Kanten der Seitenwände vorsteht. Die Seitenwände des Adapters besitzen an ihren unteren Rändern jeweils eine vorstehende Führungsschiene, an der ein Anschlag vorgesehen ist.

Dokument DE-10 2010 041 152-A offenbart eine Anschlussvorrichtung und Adapter wie in die Oberbegriffe der Ansprüche 1 und 12 offenbart.

### Offenbarung der Erfindung

Nach der Erfindung weist der Adapter an den Außenseiten seiner Seitenwände im Bereich des antriebseitigen Endes Verriegelungsnocken auf, die von Spielausgleichsrippen eines ersten oder zweiten Verbindungselements oder einer Abdeckkappe des Adapters im montierten Zustand untergriffen werden. Relativ zu den Spielausgleichsrippen sind zum abtriebseitigen Ende in Längsrichtung versetzt an den Innenseiten der Seitenwände des ersten Verbindungselements, des zweiten Verbindungselements oder der Abdeckkappe Sicherungsnocken angeordnet, die in quer zu den Spielausgleichsrippen verlaufende Montagespalten der Seitenwände des Adapters eingreifen. Ferner sind das erste Verbindungselement, das zweite Verbindungselement oder die Abdeckkappe zwischen den Montagespalten und einer Anschlagkante im montierten Zustand durch den in Längsrichtung elastisch nachgiebigen Frontteil eingeklemmt, wobei die Anschlagkante am Übergang des Frontteils des Adapters zum antriebsseitigen Teil des Adapters angeordnet ist. Somit können ein erster oder ein zweiter Wischarmtyp über die gleiche erfindungsgemäße Anschlussvorrichtung mit dem Wischblatt verbunden werden.

Gemäß einer Ausgestaltung der Erfindung verläuft die Anschlagkante des Adapters im Bereich der Seitenwände konkav. Außerdem weist die Deckwand eines Frontteils des Adapters eine Federraste auf, die in montiertem Zustand eine Deckwand des Verbindungselements oder der Abdeckkappe überlappt und in eine Rastmulde des Verbindungselements oder der Abdeckkappe eingreift. Somit erreicht man eine zusätzliche Sicherung des Adapters relativ zu den Wischarmen bzw. ihren Verbindungselementen sowie zu der Abdeckkappe des Adapters in Richtung einer Hochachse.

Bei der Montage des zugehörigen Verbindungselements bzw. der Abdeckkappe des Adapters wird diese geneigt zum Adapter gehalten, sodass sie mit ihren Spielausgleichsrippen die Verriegelungsnocken des Adapters untergreifen und stirnseitig an entsprechenden Absätzen anliegen kann. Beim Verschwenken des Verbindungselements bzw. der Abdeckkappe in eine gestreckte Lage wird der Frontteil des Adapters durch eine Frontseite des Verbindungselements bzw. der Abdeckkappe zurückgedrückt, sodass die Frontseite des Verbindungselements bzw. der Abdeckkappe, die im Bereich der Seitenwände konvex verläuft, in die konkave Form der Anschlagkante des Frontteils eingreifen kann, und eine Federraste an der dem Verbindungselement zugewandten Stirnseite der Deckwand des Frontteils die Deckwand des Verbindungselements überlappt und in eine Rastmulde an der vorderen Kante der Deckwand des Verbindungselements bzw. der Abdeckkappe eingreift. Dadurch verlaufen in montiertem Zustand die Deckwände des Frontteils und des Verbindungselements bzw. der Abdeckkappe bündig. Ferner greifen Sicherungsnocken, die in Längsrichtung relativ zu den Spielausgleichsrippen zum abtriebseitigen Ende versetzt angeordnet sind, in Montagespalten der Seitenwände des Adapters.

Die für das Öffnen und Schließen erforderliche Bewegung des Frontteils wird durch die elastische Nachgiebigkeit des Adapters erreicht. Gemäß einer Ausgestaltung der Erfindung wird hierzu vorgeschlagen, dass die Deckwand des Frontteils eine Wandstruktur besitzt, die die Nachgiebigkeit der Federraste erhöht. Ferner können nach einer weiteren Ausgestaltung die Seitenwände des Adapters antriebsseitig von der Anschlagkante jeweils einen vom oberen Rand ausgehenden Spalt und abtriebsseitig von dem Verriegelungsnocken einen vom unteren Rand ausgehenden Spalt besitzen, wobei sich die Spalten bis in den mittleren Bereich der Seitenwände erstrecken. Durch die Spalte kann die Biegsamkeit des Adapters in Längsrichtung so modifiziert werden, dass einerseits eine leichte Montage des Verbindungselements bzw. der Abdeckkappe möglich ist und andererseits dennoch ein fester, spielfreier Sitz zwischen dem Adapter einerseits und dem Verbindungselement bzw. der Abdeckkappe andererseits gewährleistet ist. Durch diese Anschlussmöglichkeiten des Adapters können zwei unterschiedliche Verbindungselemente des Wischarms an den Adapter angeschlossen werden.

Zwei weitere Möglichkeiten ergeben sich dadurch, dass der Adapter antriebsseitig offen ist und einen druckförmigen, längs verlaufenden Führungskanal besitzt, an dessen antriebsseitigem Ende ein Rastnocken vorgesehen ist, der durch eine Federzunge an einer Querwand angebunden ist, wobei der Rastnocken über einen Steg mit einem im Quersteg v-förmigen-Federbügel verbunden ist, dessen Federarme in Richtung auf das Wischblatt zusammenlaufen und an den Seitenkanten Anschlagleisten besitzen. Die abtriebsseitigen Stirnflächen der Anschlagleisten dienen als Stützlage für Hinterkanten von Vorsprüngen an den Seitenwänden der entsprechenden Verbindungselemente. Diese werden bei der Montage von der offenen Seite des Adapters über die Anschlagleisten geschoben, wobei Anschlagleisten nach innen ausweichen. Bei Erreichen der Endlage der Verbindungselemente, in der sie mit der Frontseite an einem Anschlag anstoßen, bewegen sich die Anschlagleisten wieder nach außen und hintergreifen die Hinterkanten der zugeordneten Vorsprünge. Somit sind die Verbindungselemente zwischen den Anschlagleisten und der Anschlagkante am Frontteil des Adapters elastisch eingespannt. Zusätzlich können sie durch einen Rastnocken gesichert werden, der über eine Federzunge mit dem Adapter verbunden ist und über die Seitenwände zur Deckwand der Abdeckkappe ein Stück weit vorsteht.

Ein trogförmiger Führungskanal dient zur Montage eines im Wesentlichen gradlinigen Wischarms in Form eines im Querschnitt rechteckigen Vollprofils, das an seinem freien Ende gekröpft sein kann und in der Praxis drei Varianten besitzt. Dieser Wischarm wird von der offenen Seite in den Führungskanal geschoben, wobei der Rastnocken am antriebsseitigen Ende nach unten gedrückt wird. Das Gleiche geschieht mit einem zweiten Rastnocken, der zum abtriebsseitigen Ende des Adapters versetzt an einer Federzunge angeordnet ist. Bei Erreichen der Endposition der Wischstange stößt die Stirnseite gegen einen Anschlag. In dieser Position ist eine Öffnung in dem Wischarm über dem ersten Rastnocken, sodass dieser einrasten kann und den Wischarm in Längsrichtung sichert. Das Spiel in Richtung einer Hochachse kann im Bereich des Frontteils des Adapters durch Rippen modifiziert werden, die an der inneren Seite der Deckwand des Frontteils angeordnet sind.

Die Verbindungselemente können außerhalb des Frontteils des Adapters durch die Abdeckkappe überdeckt werden. Dadurch ergibt sich ein besonders schönes Design. Außerdem werden die Gelenkteile gegenüber der Witterung und gegenüber Schmutz geschützt. Ferner werden die Windgeräusche reduziert.

Um einen Wischarm nach dem Sidelock-Prinzip anschließen zu können, besitzen die Seitenwände der Abdeckkappe zwei miteinander fluchtende Durchgangsöffnungen, die koaxial zu ersten Erweiterungen in den Montagespalten der Seitenwände des Adapters vorgesehen sind.

Da der Adapter das Kernstück der erfindungsgemäßen Anschlussvorrichtung darstellt, soll nicht nur die Anschlussvorrichtung insgesamt unter Schutz gestellt werden, sondern daneben der Adapter als Einzelbauteil. Auf ihn richten sich weitere Ansprüche.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine schematische, perspektivische Ansicht eines Wischblatts in Flachbalkenbauweise nach dem Stand der Technik,

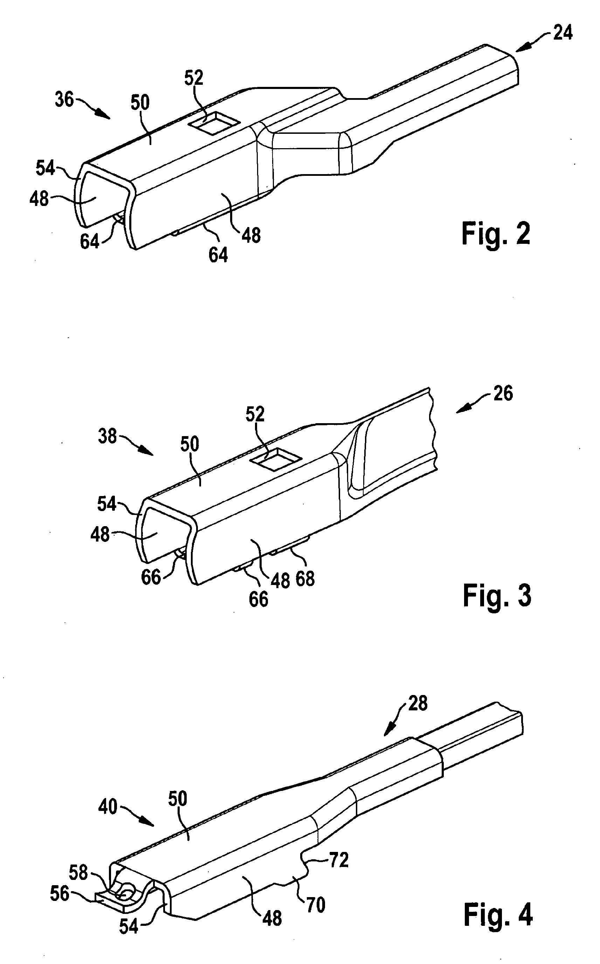

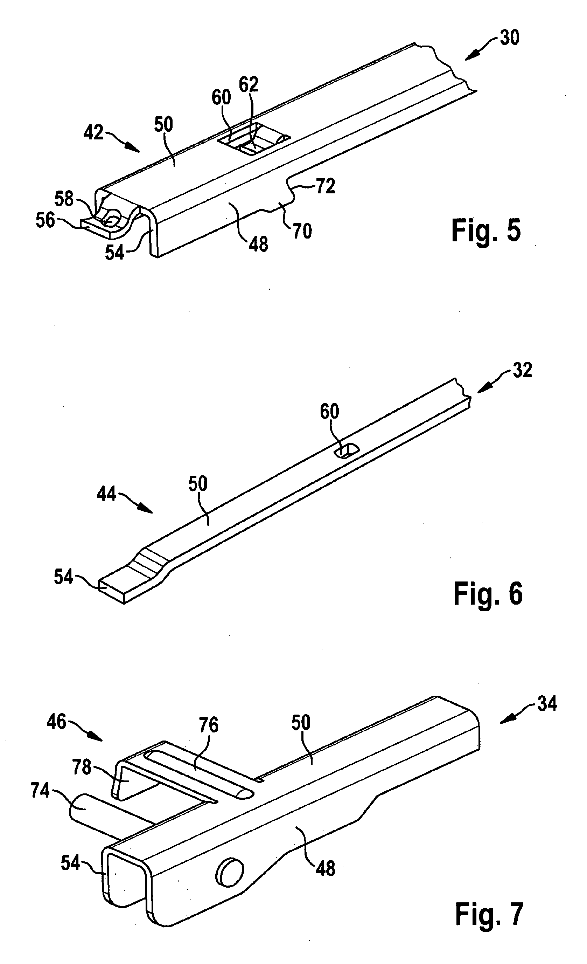

Fig. 2 bis 7 unterschiedliche Verbindungselemente an den Enden unterschiedlicher Wischarme,

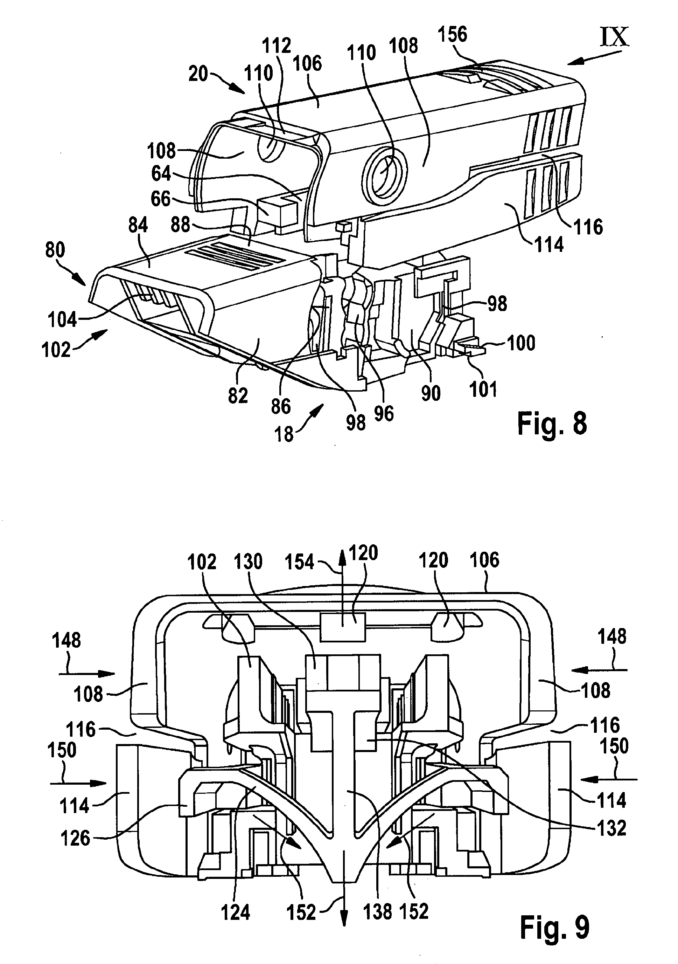

Fig. 8 eine perspektivische Ansicht eines Adapters mit einer Abdeckkappe bei der Montage,
Fig. 9 eine Ansicht in Richtung des Pfeils IX,

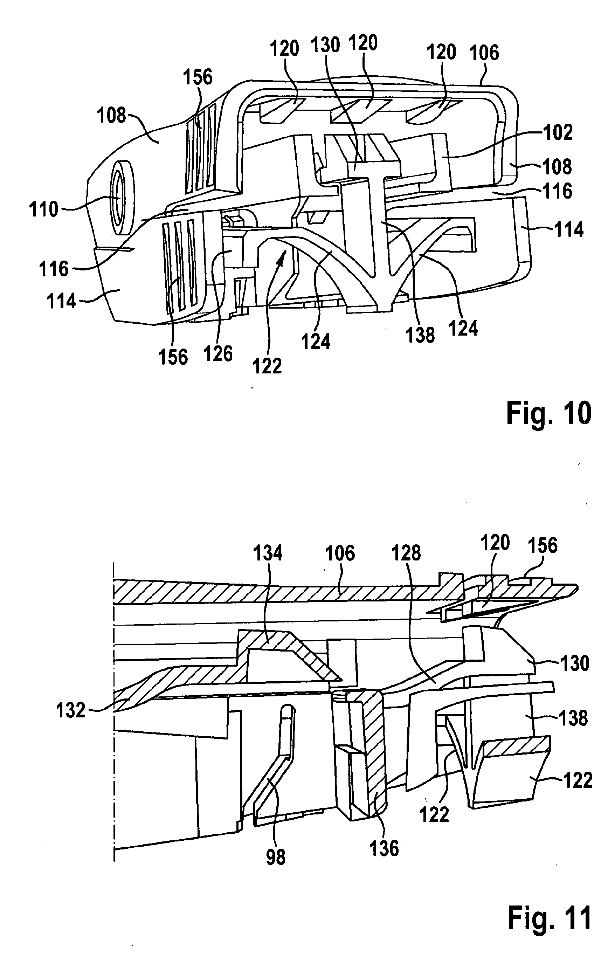

Fig. 10 eine perspektivische Ansicht nach Fig. 9,
Fig. 11 einen Teillängsschnitt durch einen Teil eines Adapters mit einer Abdeckkappe,

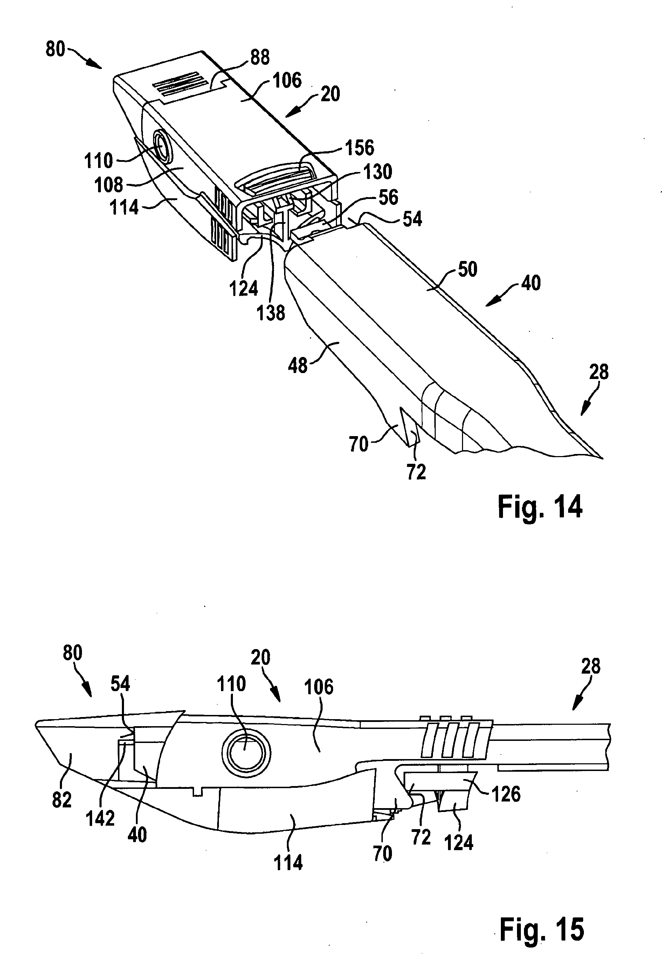

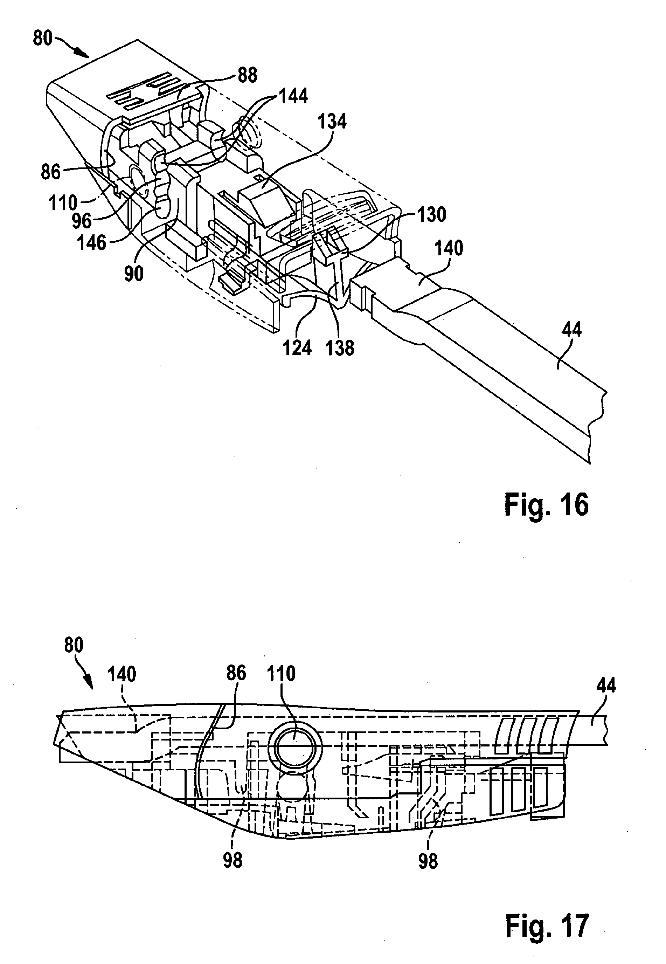

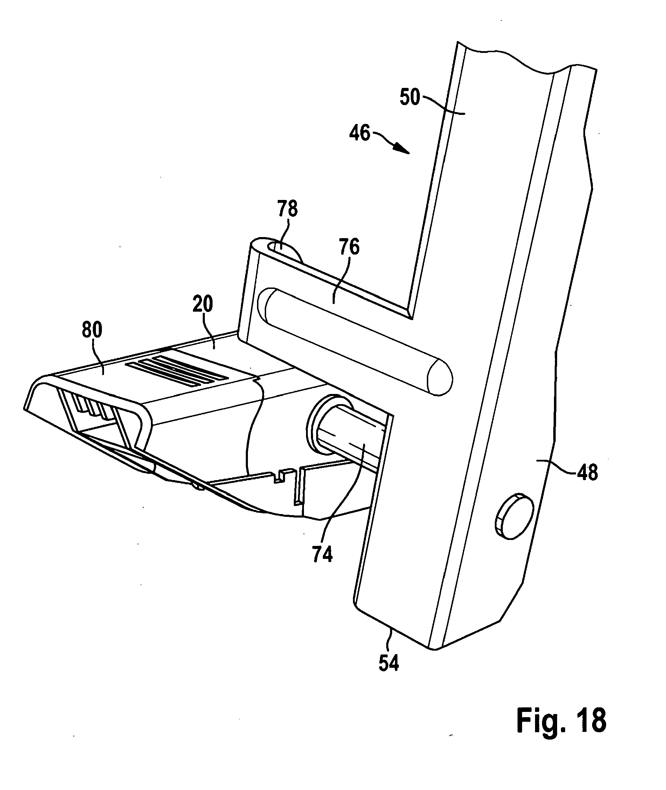

Fig. 12 bis 18 perspektivische Ansichten unterschiedlicher Verbindungselemente einer Montage.

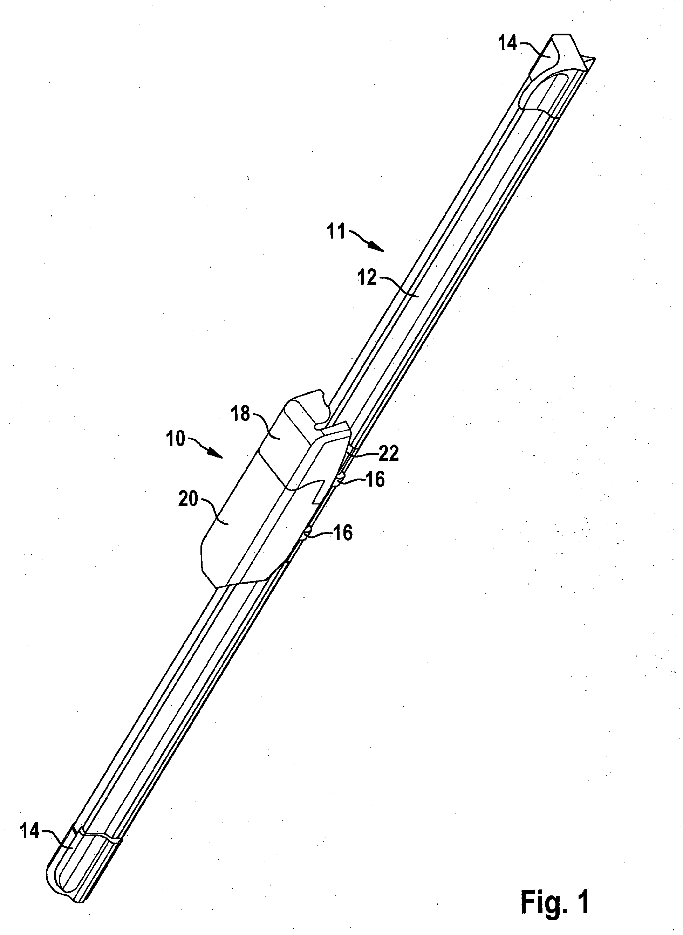

Die schematische, perspektivische Darstellung eines Wischblatts 11 in Fig. 1 lässt zwar den allgemeinen Aufbau eines Wischblatts nach dem Stand der Technik erkennen, aber keine Einzelheiten. Das Wischblatt 11 besitzt Tragelemente 22 in Form zweier vorgekrümmter, flacher Federschienen, auf denen in Längsrichtung zu beiden Seiten einer Anschlussvorrichtung 10 Spoiler 12 befestigt sind, deren Enden von Endkappen 14 überdeckt werden. Die Anschlussvorrichtung 10 umfasst ein Anschlusselement 16 in Form einer Bleckkralle, die mit ihren Krallen das Tragelement 22 seitlich umfasst, und einen Adapter 18 mit einer Abdeckkappe 20.

Der Adapter 18, der auf dem Anschlusselement 16 in Längsrichtung schwenkbar gelagert ist, kann mit Wischarmen 24, 26, 28, 30, 32, 34 drehfest aber lösbar verbunden werden. Hierzu dienen Verbindungselemente 36, 38, 40, 42, 44, 46, die an den freien Enden der Wischarme 24, 26, 28, 30, 32, 34 befestigt sind. Die Verbindungselemente 36 bis 46 können an den Wischarmen 24 bis 34 einstückig angeformt oder als Einzelbauteil in geeigneter Weise durch Schweißen, Kleben, Nieten, Krimpen oder dergleichen befestigt sein.

Der Adapter 18 besitzt einen Frontteil 80, der zum abtriebsseitigen Ende des Wischblatts 11 weist und an den sich zum antriebsseitigen Ende der Hauptkörper anschließt. Der Frontteil 80 hat ein zum Wischblatt 11 hin offenes, u-förmiges Querschnittprofil mit zwei Seitenwänden 82 und einer Deckwand 84. Die weiterführende Seitenwände sind mit 90 bezeichnet. Sie sind durch Querwände und Lagermittel für das Gelenk zwischen dem Adapter 18 und dem Anschlusselement 16 miteinander verbunden. Die Seitenwände 90 des Adapters 18 besitzen Montagespalten 96, die in Richtung einer Hochachse verlaufen und im Bereich ihrer oberen Kante erste Erweiterungen 144 und im weiteren Verlauf zur unteren Kante zweite Erweiterungen 146 besitzen. Die Seitenwände 82 des Frontteils 80 stehen seitlich gegenüber den Seitenwänden 90 des Adapters 18 vor. Die so gebildete Anschlagkante 86 ist im Bereich der Seitenwände 82 konkav ausgebildet und passt zu einer Frontseite 54 der Abdeckkappe 20 bzw. des ersten und zweiten Verbindungselements 36, 38 des ersten und zweiten Wischarms 24, 26.

Antriebsseitig von der Anschlagkante 86 verläuft von der oberen Kante der Seitenwände jeweils ein Spalt 98, der etwa bis zur Mitte der Seitenwand 90 reicht. Am antriebsseitigen Ende des Adapters 18 findet sich ein ähnlicher Spalt 98, der jedoch von der unteren Kante der Seitenwand 90 bis in den mittleren Bereich reicht. Abtriebsseitig von dem Spalt 98 am abtriebsseitigen Ende ist an der Außenseite der Seitenwand 90 ein Verriegelungsnocken 100 mit einem Absatz 101 angeformt. Im Frontteil 80 befindet sich unterhalb der Deckwand 84 ein trogförmiger Führungskanal 102, in den von der Deckwand 84 Rippen 104 ragen. Diese reduzieren den Querschnitt des Führungskanals 102 entsprechend der Querschnittsform des aufzunehmenden fünften Verbindungselements 44. Die Rippen 104 können gleichzeitig als Anschläge für die Stirnseiten der entsprechenden Wischarme 34 dienen. Die Deckwand 84 des Frontteils 80 besitzt an der der Abdeckkappe 20 zugewandten Seite eine Federraste 88, deren Federeigenschaften durch eine geeignete Wandstruktur 156 moduliert werden kann. Die Federraste 88 passt in eine Rastmulde 112, die an der Frontseite einer Deckwand 106 der Abdeckkappe 20 angeformt ist.

Die Abdeckkappe 20 bildet mit ihrer Deckwand 106 und den Seitenwänden 108 ein zum Adapter 18 hin offenes u-förmiges Querschnittprofil. An den unteren Kanten der Seitenwände 108 sind an den Innenseiten erste Spielausgleichsrippen 64 mit Sicherungsnocken 66 angeformt. Bei der Montage wird die Abdeckkappe 20 soweit gedreht, dass die ersten Spielausgleichsrippen 64 die Verriegelungsnocken 100 untergreifen und sich die antriebsseitigen Stirnseiten an den Absätzen 101 abstützen können. Bei dem Schwenken in die Ausgangslage wird der Frontteil 80 durch die Frontseite 54 der Abdeckkappe 20 verschoben, was durch die Elastizität des Adapters 18 möglich ist. Dabei kann die Federraste 88 die Frontseite 54 der Deckwand 106 übergreifen und in die Rastmulde 112 einrasten. Gleichzeitig stützen sich die konvexen Stirnseiten der Seitenwände 108 der Abdeckkappe 20 an der konkaven Anschlagkante 86 ab, sodass die Abdeckkappe 20 zwischen den Verriegelungsnocken 100 einerseits und der Anschlagkante 86 andererseits spielfrei erhalten ist, wenn sich das Frontteil 80 federnd in seine Ausgangslage zurückbewegt.

Am antriebsseitigen Ende des Adapters 18 befindet sich ein erster Rastnocken, 130, der über eine Federzunge 132 mit einer Querwand 136 verbunden ist. Ferner ist über einen Steg 138 ein v-förmiger Federbügel 122 mit dem Rastnocken 130 verbunden. Federarme 124 des Federbügel 122 treffen sich in der Spitze eines V, die dem Wischblatt 11 zugewandt ist. An den seitlichen Kanten der Federarme 124 sind in Längsrichtung verlaufende Anschlagleisten 126 angeformt, die in geringem Abstand etwa parallel zu den Innenseiten der Seitenflügel 114 der Deckkappe 20 verlaufen. Die Seitenflügel 114 werden von Teilen der Seitenwände 108 der Abdeckkappe 20 gebildet, von der sie teilweise durch Spalte 116 freigestellt sind, die vom antriebsseitigen Ende der Abdeckkappe 20 ausgehen und ein Stück weit zum abtriebsseitigen Ende reichen. Wird auf die Enden der Seitenflügel 114 ein Druck in Richtung der Pfeile 150 ausgeübt, werden die Anschlagleisten 126 nach innen gedrückt, wodurch sich die Federarme 124 in Richtung der Pfeile 152 verformen und den Rastnocken 130 lösen. Ferner sind an der Innenseite der Deckwand 106 Sperrnocken 120 angeordnet, die durch Druck in Richtung der Pfeile 148 auf die Seitenwände 108 gelöst werden können, indem sich die Deckwand 106 nach außen wölbt. Um dies mit einem geringen Kraftaufwand zu ermöglichen, ist es zweckmäßig, den Bereich der Deckwand 106 und der Seitenwände 108 mit einer geeigneten Wandstruktur 156 zu versehen, die die Nachgiebigkeit der Wände in diesem Bereich begünstigt. In Längsrichtung zum antriebsseitigen Ende gegenüber dem ersten Rastnocken 130 versetzt befindet sich ein zweiter Rastnocken 134, der über eine Federzunge 132 mit dem Adapter 18 verbunden ist.

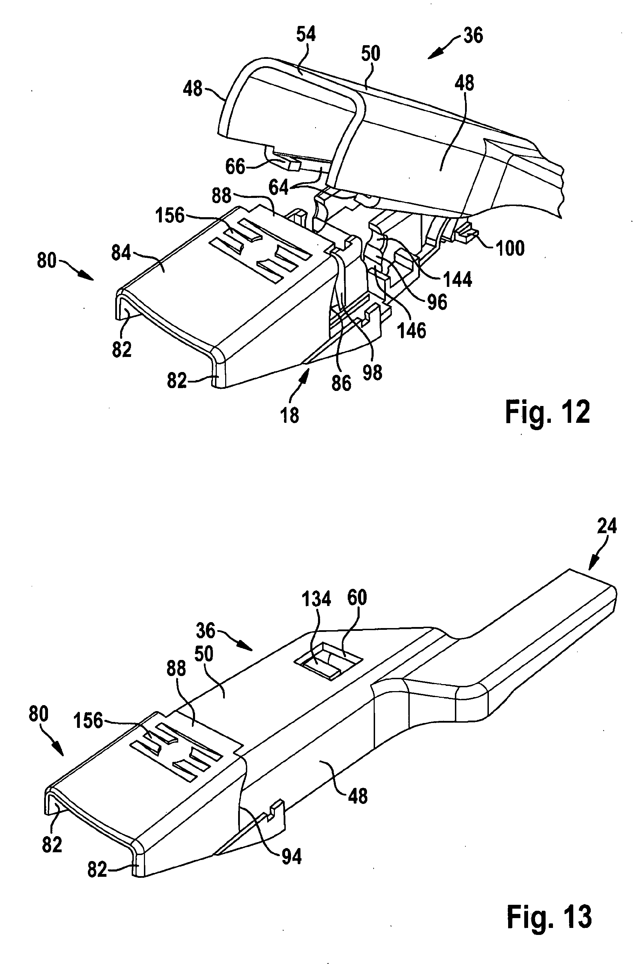

Fig. 12 zeigt die Montage des ersten Verbindungselements 36 mit dem Adapter 18. Hierbei wird die Abdeckkappe 20 nicht verwendet. Bei der Montage des ersten Wischarms 24 mit seinem Verbindungselement 36 wird dieses unter einem bestimmten Winkel zum Adapter gehalten, sodass die erste Spielausgleichsrippe 64 unter die Verriegelungsnocken 100 geschoben werden kann, bis sie stirnseitig an den Absätzen 101 anliegt. Beim Zurückschwenken des ersten Verbindungselements 36 werden die Sicherungsnocken 66 an den ersten Spielausgleichsrippen 64 in die Montagespalten 96 geschoben, wobei in Folge der weiteren Schwenkbewegung das Frontteil 80 vorwärts bewegt wird, sodass die Frontseite des ersten Verbindungselements 36 an der konkaven Anschlagkante 86 des Frontteils 80 zur Anlage gelangt. In der Endlage gelangt das Frontteil 80 des Adapters 18 auf Grund der Elastizität mit seiner Federraste 88 über die Deckwand 50 des ersten Verbindungselements 36 und greift dort in eine Rastmulde 112. Das erste Verbindungselement 36 ist somit in Richtung einer Hochachse durch die Federraste 88 und den Verriegelungsnocken 100 gesichert, während es in Längsrichtung durch den Absatz 101, den Sicherungsnocken 66 und die Anschlagkante 86 verspannt ist. Die Elastizität und Nachgiebigkeit des Adapters 18, die die spielfreie Verspannung zwischen dem Adapter 18 und dem ersten Verbindungselement 36 bewirkt, kann zum einen durch die Spalte 98 in den Seitenwänden 90 des Adapters 18 und zum anderen durch Wandstrukturen 156 in der Deckwand 84 des Frontteils 80 modifiziert werden.

Der erste Wischarm 24 verläuft seitlich versetzt zum ersten Verbindungselement 36, während der zweite Wischarm 26 in Längsrichtung zum zweiten Verbindungselement 38 verläuft. Außerdem besitzt das zweite Verbindungselement 38 zweite Spielausgleichsrippen 68, die in Längsrichtung eine kürzere Erstreckung aufweisen. Ferner ist im Abstand zu den zweiten Spielausgleichsrippen 68 in Längsrichtung versetzt zum abtriebsseitigen Ende ein von der zweiten Spielausgleichsrippe 68 getrennter Sperrnocken 66 vorgesehen. Diese Unterschiede sind jedoch für die Montage am Adapter 18 unerheblich, sodass das zweite Verbindungselement 38 in gleicher Weise wie das erste Verbindungselement 36 am Adapter 18 montiert werden kann. Die Verbindungselemente 36, 38 besitzen in ihren Deckwänden 50 Öffnungen 52, die zu einem Rastnocken 134 des Adapters 18 passen, wodurch die Verbindungselemente 36, 38 zusätzlich gesichert werden können.

Für die Montage des dritten Wischarms 28 mit seinem dritten Verbindungselement 40 und dem vierten Wischarm 30 mit seinem vierten Verbindungselement 42 wird zunächst die Abdeckkappe 20 auf den Adapter 18 montiert. Das dritte Verbindungselement 40 und das vierte Verbindungselement 42 haben an ihren Frontseiten 54 jeweils eine gekröpfte Lasche 56 angeformt, die eine Öffnung 58 aufweist. Sie werden auf gleiche Weise montiert. Das Verbindungselement 40 wird von dem antriebsseitigen Ende in den Zwischenraum zwischen dem Adapter 18 und der Abdeckkappe 20 geschoben, wobei nacheinander der Rastnocken 130 und der Rastnocken 134 zurückgedrückt werden. Gleichzeitig werden von den Seitenwänden 48 des Verbindungselements 40 die Anschlagleisten 126 an den Federarmen 124 nach innen gedrückt, bis die Frontseite 54 des dritten Verbindungselements 40 gegen einen Anschlag 142 im Frontteil 80 des Adapters 18 stößt. In dieser Endlage erreichen die Anschlagleisten 126 die Hinterkanten der Vorsprünge 70 an den Seitenwänden 48, wobei sie auf Grund der Elastizität der Federarme 124 ihre Ausgangsposition wieder einnehmen, sodass das dritte Verbindungselement 40 zwischen dem Anschlag 142 und den Stirnseiten der Anschlagleisten 126 in Längsrichtung gesichert ist. Zur Demontage wird in Richtung der Pfeile 150 auf die Seitenflügel 114 der Abdeckkappe 20 gedrückt, wodurch die Anschlagleisten 126 nach innen verschoben werden, sodass das dritte Verbindungselement 40 in Längsrichtung wieder freigegeben wird.

Das vierte Verbindungselement 42 unterscheidet sich für die Montage im Wesentlichen dadurch, dass die Hinterkante 72 am Vorsprung 70 senkrecht zur Deckwand 50 des vierten Verbindungselements 42 verläuft und eine Öffnung 60 mit einer Lasche 62 in der Deckwand 50 besitzt. Diese Unterschiede haben keinen Einfluss auf die Montage am Adapter 18.

Das fünfte Verbindungselement 44 des fünften Wischarms 32 ist ein im Wesentlichen gerades Stangenprofil mit einem rechteckigen Vollquerschnitt und einem gekröpften Ende 140, das in Längsrichtung in den Führungskanal 102 geschoben wird, wobei zunächst der Rastnocken 130 und dann der Rastnocken 134 zurückgedrückt werden, bis die Stirnseite des fünften Verbindungselements 44 die Endposition erreicht, in der der Rastnocken 130 in die Öffnung 60 des fünften Verbindungselements 44 einrastet. Gleichzeitig greift von der Innenseite der Deckwand 106 ein Sperrnocken 120 von oben in die Öffnung 60, sodass das fünfte Verbindungselement 44 in Längsrichtung von oben zusätzlich durch die Abdeckkappe 20 gesichert ist. Zur Demontage drückt man in Richtung 150 auf die Anschlagleisten 126, wodurch die Federarme 124 des Flügels 122 in Richtung der Pfeile 152 verformt werden, sodass über den Steg 138 der Rastnocken 130 gelöst wird. Durch Druck in Richtung der Pfeile 148 auf die Seitenwände 108 der Abdeckkappe 20 wölbt sich die Deckwand 106, wodurch der Sperrnocken 120 an der Innenseite sich in Richtung des Pfeils 154 bewegt und das fünfte Verbindungselement freigibt.

Das sechste Verbindungselement 46 des sechsten Wischarms 34 wird in üblicher Weise montiert. Dabei wird das sechste Verbindungselement um einen bestimmten Winkelbetrag um einen Lagerstift 74 gedreht, sodass eine Brücke 76 mit ihrem abgewinkelten Ende 78 über die Abdeckkappe 20 geschoben werden kann, wobei der Lagerstift 74 durch die Durchgangsöffnungen 110 und die ersten Erweiterungen 144 der Montagespalten 96 geschoben wird. Beim Zurückschwenken in die Ausgangslage greift das abgewinkelte Ende 78 über die Abdeckkappe 20 und liegt an der benachbarten Seitenwand der Abdeckkappe 20 an. Somit ist die Lage des sechsten Verbindungselements 46 in Längsrichtung des Lagerstifts 74 gesichert.

## Patentansprüche

1. Anschlussvorrichtung (10) zum gelenkigen Verbinden eines Wischblatts (11) mit einem Wischarm (24, 26, 28, 30, 32, 34), die ein mit einem Tragelement (22) des Wischblatts (11) drehfest verbundenes Anschlusselement (16) besitzt, auf dem ein Adapter (18) quer zu seiner Längsrichtung schwenkbar gelagert ist, der an dem freien Ende des Wischarms (24, 26, 28, 30, 32, 34) oder an einem mit diesem fest verbundenen Verbindungselement (36, 38, 40, 42, 44, 46) lösbar und drehfest befestigt werden kann, wobei der Adapter (18) mehrere Mittel (80, 96, 100, 102, 122, 126, 130, 134, 144) besitzt, um unterschiedliche Verbindungselemente (36, 38, 40, 42, 44, 46) verschiedener Wischarme (24, 26, 28, 30, 32, 34) aufnehmen zu können, wobei zu den Mitteln Anschlagkanten (86), Federrasten (88), Verriegelungsnocken (100) Federbügel (122), Federzungen (128, 132) mit Rastnocken (130, 134) gehören, **dadurch gekennzeichnet, dass** der Adapter (18) an den Außenseiten seiner Seitenwände (90) im Bereich des antriebseitigen Endes Verriegelungsnocken (100) aufweist, wobei Spielausgleichsrippen (64, 68) eines ersten oder zweiten Verbindungselements (36, 38) oder einer Abdeckkappe (20) des Adapters (18) im montierten Zustand die Verriegelungsnocken (100) untergreifen und stirnseitig an deren Absätzen (101) anliegen, während relativ zu den Spielausgleichsrippen (64, 68) zum abtriebseitigen Ende in Längsrichtung versetzt an den Innenseiten der Seitenwände (48, 108) des ersten Verbindungselements (36), des zweiten Verbindungselements (38) oder der Abdeckkappe (20) angeordnete Sicherungsnocken (66) in quer zu den Spielausgleichsrippen (64, 68) verlaufende Montagespalte (96) der Seitenwände (90) des Adapters (18) eingreifen, und dass das erste Verbindungselement (36), das zweite Verbindungselement (38) oder die Abdeckkappe (20) zwischen den Montagespalten (96) und einer Anschlagkante (86) im montierten Zustand durch den in Längsrichtung elastisch nachgiebigen Frontteil (80) eingeklemmt sind, wobei die Anschlagkante (86) am Übergang des Frontteils (80) des Adapters (18) zum antriebsseitigen Teil des Adapters (18) angeordnet ist.

2. Anschlussvorrichtung (10) nach Anspruch 1, **dadurch gekennzeichnet, dass** die Anschlagkante (86) des Adapters (18) im Bereich der Seitenwände (82) konkav verläuft und im Bereich einer Deckwand (84) des Frontteils (80) des Adapters (18) eine Federraste (88) aufweist, die im montierten Zustand eine Deckwand (50) des ersten oder zweiten Verbindungselements (26, 28) oder der Abdeckkappe (20) überlappt und in eine Rastmulde (112) des Verbindungselements (26, 28) oder der Abdeckkappe (20) eingreift.

3. Anschlussvorrichtung (10) nach Anspruch 2, **dadurch gekennzeichnet, dass** die Deckwand (84) des Frontteils (80) eine Wandstruktur (156) besitzt, die die Nachgiebigkeit der Federraste (88) erhöht.

4. Anschlussvorrichtung (10) nach einem der vorhergehenden Ansprüche, **dadurch gekennzeichnet, dass** die Seitenwände (90) des Adapters (18) antriebseitig von der Anschlagkante (86) jeweils einen vom oberen Rand ausgehenden Spalt (98) und abtriebsseitig von dem Verriegelungsnocken (100) einen vom unteren Rand ausgehenden Spalt (98) besitzen, wobei sich der Spalt (98) bis in den mittleren Bereich der Seitenwände (90) erstreckt.

5. Anschlussvorrichtung (10) nach einem der vorhergehenden Ansprüche, **dadurch gekennzeichnet, dass** der Adapter (18) antriebseitig offen ist und einen trogförmigen, längs verlaufenden Führungskanal (102) besitzt, an dessen antriebseitigem Ende ein Rastnocken (130) vorgesehen ist, der durch eine Federzunge (128) an einer Querwand (136) angebunden ist, wobei der Rastnocken (130) über einen Steg (138) mit einem im Querschnitt v-förmigen Federbügel (122) verbunden ist, dessen Federarme (124) in Richtung auf das Wischblatt (10) zusammenlaufen und an den Seitenkanten Anschlagleisten (126) besitzen, die seitlich über die Seitenwände (90) des Adapters (18) vorstehen.

6. Anschlussvorrichtung (10) nach Anspruch 5, **dadurch gekennzeichnet, dass** zum Abtriebsende des Adapters (18) versetzt zum ersten Rastnocken (130) ein zweiter Rastnocken (134) über eine weitere Federzunge (132) am Adapter (18) angebunden ist.

7. Anschlussvorrichtung (10) nach einem der vorhergehenden Ansprüche mit einer Abdeckkappe (20), **dadurch gekennzeichnet, dass** die Seitenwände (108) der Abdeckkappe (20) ausgehend von ihren antriebseitigen Enden jeweils einen in Längsrichtung verlaufenden Spalt (116) aufweisen, durch den jeweils ein Seitenflügel (114) im unteren Bereich der zugeordneten Seitenwand (108) gebildet wird, über den seitlicher Druck auf die Anschlagleisten (126) des Federbügels (122) ausgeübt werden kann, um den Rastnocken (130) zu lösen.

8. Anschlussvorrichtung (10) nach Anspruch 7, **dadurch gekennzeichnet, dass** an der Innenseite der Deckwand (106) der Abdeckkappe (20) Sperrnocken (120) vorgesehen sind, die sich bei einem Druck am antriebseitigen Ende oberhalb der Seitenflügel (114) auf die Seitenwände (108) lösen.

9. Anschlussvorrichtung (10) nach Anspruch 7 oder 8, **dadurch gekennzeichnet, dass** die Seitenwände (108), die Seitenflügel (114) und die Deckwand (106) am antriebseitigen Ende eine Wandstruktur (156) haben, die die Nachgiebigkeit und die Handhabung verbessern.

10. Anschlussvorrichtung (10) nach Anspruch 7, **dadurch gekennzeichnet, dass** die Seitenwände (108) der Abdeckkappe (20) zwei miteinander fluchtende Durchgangsöffnungen (110) haben, die koaxial zu ersten Erweiterungen (144) in Montagespalten (96) der Seitenwände (90) des Adapters (18) angeordnet sind.

11. Anschlussvorrichtung (10) nach einem der vorhergehenden Ansprüche, **dadurch gekennzeichnet, dass** am abtriebseitigen Ende des Führungskanals (102) Längsrippen (104) angeordnet sind, die zur Führung und als Anschlag des fünften Verbindungselements (44) dienen können.

12. Adapter (18) zum Verwenden bei einer Anschlussvorrichtung (10) nach einem der vorhergehenden Ansprüche, wobei er an den Außenseiten seiner Seitenwände (90) im Bereich des antriebseitigen Endes Verriegelungsnocken (100) aufweist, **dadurch gekennzeichnet, dass** während relativ zu den Verriegelungsnocken (100) zum abtriebseitigen Ende in Längsrichtung versetzt in den Seitenwände (90) des Adapters (18) quer zur Längsrichtung verlaufende Montagespalten (96) angeordnet sind, und dass die Anschlagkanten (86) am Übergang des Frontteils (80) des Adapters (18) zum antriebsseitigen Teil des Adapters (18) angeordnet und in Längsrichtung elastisch nachgiebig sind.

13. Adapter (18) nach Anspruch 12, **dadurch gekennzeichnet, dass** die Seitenwände (90) des Adapters (18) antriebseitig von der Anschlagkante (86) jeweils einen vom oberen Rand ausgehenden Spalt (98) und abtriebsseitig von dem Verriegelungsnocken (100) einen vom unteren Rand ausgehenden Spalt (98) besitzen, wobei sich die Spalte (98) bis in den mittleren Bereich der Seitenwände (90) erstrecken.

14. Adapter (18) nach Anspruch 12, **dadurch gekennzeichnet, dass** der Adapter (18) antriebseitig offen ist und einen trogförmigen, längs verlaufenden Führungskanal (102) besitzt, an dessen antriebseitigem Ende ein Rastnocken (130) vorgesehen ist, der durch eine Federzunge (128) an einer Querwand (136) angebunden ist, wobei der Rastnocken (130) über einen Steg (138) mit einem im Querschnitt v-förmigen Federbügel (122) verbunden ist, dessen Federarme (124) in Richtung auf das Wischblatt (11) zusammenlaufen und an den Seitenkanten Anschlagleisten (126) besitzen, und dass die Seitenwände (108) einer zugehörigen Abdeckkappe (20) ausgehend von ihren antriebseitigen Enden jeweils einen in Längsrichtung verlaufenden Spalt (116) aufweisen, durch den jeweils ein Seitenflügel (114) im unteren Bereich der zugeordneten Seitenwand (108) gebildet wird, über den seitlicher Druck auf die Anschlagleisten (126) des Federbügels (122) ausgeübt werden kann, um den Rastnocken (130) zu lösen.

## Claims

1. Connecting device (10) for the articulated connection of a wiper blade (11) to a wiper arm (24, 26, 28, 30, 32, 34), said connecting device having a connecting element (16) which is connected to a supporting element (22) of the wiper blade (11) for conjoint rotation and on which an adapter (18) is mounted pivotably transversely with respect to the longitudinal direction thereof, said adapter being able to be fastened releaseably and for conjoint rotation to the free end of the wiper arm (24, 26, 28, 30, 32, 34) or to a joining element (36, 38, 40, 42, 44, 46) connected fixedly to the latter, wherein the adapter (18) has a plurality of means (80, 96, 100, 102, 122, 126, 130, 134, 144) in order to be able to receive different joining elements (36, 38, 40, 42, 44, 46) of different wiper arms (24, 26, 28, 30, 32, 34), wherein the means include stop edges (86), spring latches (88), locking cams (100), spring clips (122) and spring tongues (128, 132) with latching cams (130, 134), **characterized in that** the outsides of the side walls (90) of the adapter (18) have locking cams (100) in the region of the driving end, wherein, in the fitted state, play-compensating ribs (64, 68) of a first or second joining element (36, 38) or of a covering cap (20) of the adapter (18) engage under the locking cams (100) and bear on the end sides against the steps (101) thereof, while securing cams (66) which are arranged on the insides of the side walls (48, 108) of the first joining element (36), of the second joining element (38) or of the covering cap (20) in a manner offset in the longitudinal direction relative to the play-compensating ribs (64, 68) at the driven end engage in installation gaps (96) in the side walls (90) of the adapter (18), said installation gaps running transversely with respect to the play-compensating ribs (64, 68), and **in that**, in the fitted state, the first joining element (36), the second joining element (38) or the covering cap (20) are clamped between the installation gaps (96) and a stop edge (86) by the front part (80), which is elastically flexible in the longitudinal direction, wherein the stop edge (86) is arranged at the transition of the front part (80) of the adapter (18) to the driving part of the adapter (18).

2. Connecting device (10) according to Claim 1, **characterized in that** the stop edge (86) of the adapter (18) runs concavely in the region of the side walls (82) and, in the region of a top wall (84) of the front part (80) of the adapter (18), has a spring latch (88) which, in the fitted state, overlaps a top wall (50) of the first or second joining element (26, 28) or of the covering cap (20) and engages in a latching trough (112) in the joining element (26, 28) or in the covering cap (20).

3. Connecting device (10) according to Claim 2, **characterized in that** the top wall (84) of the front part (80) has a wall structure (156) which increases the flexibility' of the spring latch (88).

4. Connecting device (10) according to one of the preceding claims, **characterized in that** the side walls (90) of the adapter (18) each have a gap (98), which starts from the upper edge, on the drive side of the stop edge (86) and a gap (98), which starts from the lower edge, on the driven side of the locking cam (100), wherein the gap (98) extends into the central region of the side walls (90).

5. Connecting device (10) according to one of the preceding claims, **characterized in that** the adapter (18) is open on the drive side and has a trough-shaped, longitudinally running guide channel (102), on the driving end of which there is provided a latching cam (130) which is connected by a spring tongue (128) to a transverse wall (136), wherein the latching cam (130) is connected via a web (138) to a spring clip (122) which is V-shaped in cross section and the spring arms (124) of which converge in the direction of the wiper blade (11) and, on the side edges, have stop strips (126) which protrude laterally over the side walls (90) of the adapter (18).

6. Connecting device (10) according to Claim 5, **characterized in that** a second latching cam (134) offset with respect to the first latching cam (130) towards the driven end of the adapter (18) is connected to the adapter (18) via a further spring tongue (132).

7. Connecting device (10) according to one of the preceding claims, with a covering cap (20), **characterized in that** the side walls (108) of the covering cap (20) each have, starting from the driving ends thereof, a gap (116) which runs in the longitudinal direction and by means of which a respective side wing (114) is formed in the lower region of the associated side wall (108), via which side wing lateral pressure can be exerted on the stop strips (126) of the spring clip (122) in order to release the latching cam (130).

8. Connecting device (10) according to Claim 7, **characterized in that** blocking cams (120) are provided on the inside of the top wall (106) of the covering cap (20), said blocking cams being released upon application of pressure to the side walls (108) above the side wings (114) at the driving end.

9. Connecting device (10) according to Claim 7 or 8, **characterized in that** the side walls (108), the side wings (114) and the top wall (106) at the driving end have a wall structure (156) which improves the flexibility and the handling.

10. Connecting device (10) according to Claim 7, **characterized in that** the side walls (108) of the covering cap (20) have two passage openings (110) which are aligned with each other and are arranged coaxially with respect to first extensions (144) in installation gaps (96) in the side walls (90) of the adapter (18).

11. Connecting device (10) according to one of the preceding claims, **characterized in that** longitudinal ribs (104) which can serve for guidance and as a stop of the fifth joining element (44) are arranged at the driven end of the guide channel (102).

12. Adapter (18) for use in a connecting device (10) according to one of the preceding claims, wherein the outsides of the side walls (90) of said adapter have locking cams (100) in the region of the driving end, **characterized in that** installation gaps (96) running transversely with respect to the longitudinal direction are arranged in the side walls (90) of the adapter (18) in a manner offset in the longitudinal direction relative to the locking cams (100) at the driven end, and **in that** the stop edges (86) are arranged at the transition of the front part (80) of the adapter (18) to the driving part of the adapter (18) and are elastically flexible in the longitudinal direction.

13. Adapter (18) according to Claim 12, **characterized in that** the side walls (90) of the adapter (18) each have a gap (98), which starts from the upper edge, on the drive side of the stop edge (86) and a gap (98), which starts from the lower edge, on the driven side of the locking cam (100), wherein the gap (98) extends into the central region of the side walls (90).

14. Adapter (18) according to Claim 12, **characterized in that** the adapter (18) is open on the drive side and has a trough-shaped, longitudinally running guide channel (102), on the driving end of which there is provided a latching cam (130) which is connected by a spring tongue (128) to a transverse wall (136), wherein the latching cam (130) is connected via a web (138) to a spring clip (122) which is V-shaped in cross section and the spring arms (124) of which converge in the direction of the wiper blade (11) and, on the side edges, have stop strips (126), and **in that** the side walls (108) of an associated covering cap (20) each have, starting from the driving ends thereof, a gap (116) which runs in the longitudinal direction and by means of which a respective side wing (114) is formed in the lower region of the associated side wall (108), via which side wing lateral pressure can be exerted on the stop strips (126) of the spring clip (122) in order to release the latching cam (130).

## Revendications

1. Dispositif de raccordement (10) pour la connexion articulée d'un balai d'essuie-glace (11) à un bras d'essuie-glace (24, 26, 28, 30, 32, 34), qui présente un élément de raccordement (16) connecté de manière solidaire en rotation à un élément de support (22) du balai d'essuie-glace (11), sur lequel un adaptateur (18) est supporté de manière pivotante transversalement à sa direction longitudinale, lequel peut être fixé de manière amovible et solidaire en rotation à l'extrémité libre du bras d'essuie-glace (24, 26, 28, 30, 32, 34) ou à un élément de liaison (36, 38, 40, 42, 44, 46) connecté fixement à celui-ci, l'adaptateur (18) possédant plusieurs moyens (80, 96, 100, 102, 122, 126, 130, 134, 144), afin de pouvoir recevoir différents éléments de liaison (36, 38, 40, 42, 44, 46) de différents bras d'essuie-glace (24, 26, 28, 30, 32, 34), les moyens comprenant des arêtes de butée (86), des cliquets à ressort (88), des cames de verrouillage (100), des étriers à ressort (122), des langues de ressort (128, 132), avec des cames d'encliquetage (130, 134), **caractérisé en ce que** l'adaptateur (18) présente, au niveau des côtés extérieurs de ses parois latérales (90), dans la région de l'extrémité du côté de l'entraînement, des cames de verrouillage (100), des nervures de compensation de jeu (64, 68) d'un premier ou d'un deuxième élément de liaison (36, 38) ou d'un chapeau de recouvrement (20) de l'adaptateur (18) venant en prise par le dessous dans l'état monté avec les cames de verrouillage (100) et s'appliquant du côté frontal contre leurs épaulements (101), tandis que des cames de fixation (66) disposées par rapport aux nervures de compensation de jeu (64, 68) de manière décalée dans la direction longitudinale par rapport à l'extrémité du côté de la sortie au niveau des côtés intérieurs des parois latérales (48, 108) du premier élément de liaison (36), du deuxième élément de liaison (38) ou du chapeau de recouvrement (20) viennent en prise dans des fentes de montage (96) des parois latérales (90) de l'adaptateur (18) s'étendant transversalement aux nervures de compensation de jeu (64, 68), et **en ce que** le premier élément de liaison (36), le deuxième élément de liaison (38) ou le chapeau de recouvrement (20) sont serrés entre les fentes de montage (96) et une arête de butée (86), dans l'état monté, par la partie frontale (80) élastiquement flexible dans la direction longitudinale, l'arête de butée (86) étant disposée au niveau de la transition de la partie frontale (80) de l'adaptateur (18) à la partie de l'adaptateur (18) du côté de l'entraînement.

2. Dispositif de raccordement (10) selon la revendication 1, **caractérisé en ce que** l'arête de butée (86) de l'adaptateur (18) s'étend sous forme concave dans la région des parois latérales (82) et présente, dans la région d'une paroi de recouvrement (84) de la partie frontale (80) de l'adaptateur (18), un cliquet à ressort (88) qui, dans l'état monté, chevauche une paroi de recouvrement (50) du premier ou du deuxième élément de liaison (26, 28) ou du chapeau de recouvrement (20) et vient en prise dans un creux d'encliquetage (112) de l'élément de liaison (26, 28) ou du chapeau de recouvrement (20).

3. Dispositif de raccordement (10) selon la revendication 2, **caractérisé en ce que** la paroi de recouvrement (84) de la partie frontale (80) présente une structure de paroi (156) qui augmente la flexibilité du cliquet à ressort (88).

4. Dispositif de raccordement (10) selon l'une quelconque des revendications précédentes, **caractérisé en ce que** les parois latérales (90) de l'adaptateur (18) présentent, du côté de l'entraînement, depuis l'arête de butée (86), à chaque fois une fente (98) partant du bord supérieur et, du côté de la sortie, depuis la came de verrouillage (100), une fente (98) partant du bord inférieur, la fente (98) s'étendant jusque dans la région centrale des parois latérales (90).

5. Dispositif de raccordement (10) selon l'une quelconque des revendications précédentes, **caractérisé en ce que** l'adaptateur (18) est ouvert du côté de l'entraînement et présente un canal de guidage en forme d'auge (102), s'étendant longitudinalement, au niveau de l'extrémité du côté de l'entraînement duquel est prévue une came d'encliquetage (130) qui est reliée à une paroi transversale (136) par une langue de ressort (128), la came d'encliquetage (130) étant connectée par le biais d'une nervure (138) à un étrier à ressort (122) de section transversale en forme de v, dont les bras de ressort (124) convergent dans la direction du balai d'essuie-glace (11) et présentent au niveau des arêtes latérales des nervures de butée (126) qui font saillie latéralement au-delà des parois latérales (90) de l'adaptateur (18).

6. Dispositif de raccordement (10) selon la revendication 5, **caractérisé en ce qu'**une deuxième came d'encliquetage (134) décalée par rapport à la première came d'encliquetage (130) vers l'extrémité de sortie de l'adaptateur (18) est reliée à l'adaptateur (18) par le biais d'une langue de ressort supplémentaire (132).

7. Dispositif de raccordement (10) selon l'une quelconque des revendications précédentes, comprenant un chapeau de recouvrement (20), **caractérisé en ce que** les parois latérales (108) du chapeau de recouvrement (20), partant de leurs extrémités du côté de l'entraînement, présentent à chaque fois une fente (116) s'étendant dans la direction longitudinale, à travers laquelle est formée à chaque fois une aile latérale (114) dans la région inférieure de la paroi latérale associée (108), par le biais de laquelle une pression latérale appliquée aux nervures de butée (126) de l'étrier de ressort (122) peut être exercée afin de libérer la came d'encliquetage (130).

8. Dispositif de raccordement (10) selon la revendication 7, **caractérisé en ce que** des cames de verrouillage (120) sont prévues au niveau du côté intérieur de la paroi de recouvrement (106) du chapeau de recouvrement (20), lesquelles se libèrent lors de l'application d'une pression au niveau de l'extrémité du côté de l'entraînement au-dessus des ailes latérales (114) sur les parois latérales (108).

9. Dispositif de raccordement (10) selon la revendication 7 ou 8, **caractérisé en ce que** les parois latérales (108), les ailes latérales (114) et la paroi de recouvrement (106) présentent, au niveau de l'extrémité du côté de l'entraînement, une structure de paroi (156) qui améliore la flexibilité et la manipulation.

10. Dispositif de raccordement (10) selon la revendication 7, **caractérisé en ce que** les parois latérales (108) du chapeau de recouvrement (20) présentent deux ouvertures de passage (110) en affleurement l'une avec l'autre qui sont disposées de manière coaxiale par rapport à des premiers élargissements (144) dans des fentes de montage (96) des parois latérales (90) de l'adaptateur (18).

11. Dispositif de raccordement (10) selon l'une quelconque des revendications précédentes, **caractérisé en ce qu'**au niveau de l'extrémité du côté de la sortie du canal de guidage (102) sont disposées des nervures longitudinales (104) qui peuvent servir de butée et pour le guidage du cinquième élément de liaison (44).

12. Adaptateur (18) pour l'utilisation dans un dispositif de raccordement (10) selon l'une quelconque des revendications précédentes, l'adaptateur présentant, au niveau des côtés extérieurs de ses parois latérales (90), dans la région de l'extrémité du côté de l'entraînement des cames de verrouillage (100),, **caractérisé en ce que** des fentes de montage (96) s'étendant transversalement à la direction longitudinale sont disposées dans les parois latérales (90) de l'adaptateur (18) de manière décalée dans la direction longitudinale vers l'extrémité du côté de la sortie par rapport aux cames de verrouillage (100), et **en ce que** les arêtes de butée (86) sont disposées au niveau de la transition de la partie frontale (80) de l'adaptateur (18) à la partie de l'adaptateur (18) du côté de l'entraînement et sont élastiquement flexibles dans la direction longitudinale.

13. Adaptateur (18) selon la revendication 12, **caractérisé en ce que** les parois latérales (90) de l'adaptateur (18) présentent, du côté de l'entraînement, depuis l'arête de butée (86), à chaque fois une fente (98) partant du bord supérieur et, du côté de la sortie, depuis la came de verrouillage (100), une fente (98) partant du bord inférieur, les fentes (98) s'étendant jusque dans la région centrale des parois latérales (90).

14. Adaptateur (18) selon la revendication 12, **caractérisé en ce que** l'adaptateur (18) est ouvert du côté de l'entraînement et présente un canal de guidage (102) en forme d'auge, s'étendant longitudinalement, au niveau de l'extrémité du côté de l'entraînement duquel est prévue une came d'encliquetage (130) qui est reliée à une paroi transversale (136) par une langue de ressort (128), la came d'encliquetage (130) étant connectée par le biais d'une nervure (138) à un étrier à ressort (122) de section transversale en forme de v, dont les bras de ressort (124) convergent dans la direction du balai d'essuie-glace (11) et présentent au niveau des arêtes latérales des nervures de butée (126), et **en ce que** les parois latérales (108) d'un chapeau de recouvrement associé (20), partant de leurs extrémités du côté de l'entraînement, présentent à chaque fois une fente (116) s'étendant dans la direction longitudinale, à travers laquelle est formée à chaque fois une aile latérale (114) dans la région inférieure de la paroi latérale associée (108), par le biais de laquelle une pression latérale appliquée aux nervures de butée (126) de l'étrier de ressort (122) peut être exercée afin de libérer la came d'encliquetage (130).
